# EUROPÄISCHE PATENTSCHRIFT

(11) **EP 3 573 735 B1**
(45) Veröffentlichungstag und Bekanntmachung des Hinweises auf die Patenterteilung: **09.11.2022**
(21) Anmeldenummer: 18700038.5
(22) Anmeldetag: 09.01.2018
(51) Int. Cl.: B01D 29/15, B01D 36/00, B01D 19/00, B01D 35/147, B01D 29/92

(54) **FILTERVORRICHTUNG**
FILTER APPARATUS
DISPOSITIF DE FILTRATION

(30) Priorität: 26.01.2017 DE 102017000713
(43) Veröffentlichungstag der Anmeldung: 04.12.2019
(73) Patentinhaber: Hydac Fluidcarecenter GmbH, 66280 Sulzbach/Saar (DE)
(72) Erfinder: WOHLERS, Alexander, 54439 Saarburg (DE); OTTO, John, 57350 Spicheren (FR); WILKENDORF, Werner, 66564 Ottweiler (DE)
(74) Vertreter: Bartels und Partner, Patentanwälte
(86) Internationale Anmeldenummer: PCT/EP2018/050419
(87) Internationale Veröffentlichungsnummer: WO 2018/137919

(56) Entgegenhaltungen:
- EP-A1- 0 856 345
- WO-A1-2010/118803
- WO-A1-2014/131420
- DE-A1- 3 108 948

## Beschreibung

Die Erfindung betrifft eine Filtervorrichtung, insbesondere zur Filtration von Hydraulikmedien.

Filtervorrichtungen der vorstehenden Gattung als Bestandteil von Hydrauliksystemen sind Stand der Technik. Zur Vermeidung von Beeinträchtigungen sicherheitsrelevanter Komponenten, wie Ventile, hydraulische Antriebe, Steuerelemente und dergleichen, ist wesentliche Voraussetzung, dass die Filtervorrichtungen eine gleichbleibende Qualität der filtrierten Medien gewährleisten. Die einwandfreie Funktion der im System befindlichen Filtervorrichtungen ist daher für die Betriebssicherheit eine Grundbedingung.

Die DE 31 08 948 A1 offenbart eine Filtervorrichtung, insbesondere zur Filtration von Hydraulikmedien, mit einem Filtergehäuse und einem darin angeordneten Filterelement, wobei mittels einer Entgasungseinrichtung, die einen Unterdruck erzeugt, im Filtergehäuse befindliche Luft durch Absaugen aus diesem entfernbar ist, wobei die Entgasungseinrichtung eine Vakuumkammer, eine Strahlpumpe und eine Ventileinrichtung aufweist, die Luft aus dem Filtergehäuse in die Vakuumkammer verbringt, wobei die Entgasungseinrichtung eine Entnahmeeinrichtung aufweist, die als Blende oder Drossel wirkt, die zusätzlich oder alternativ zu der Ventileinrichtung Luft oder Öl aus dem Filtergehäuse in die Vakuumkammer strömen lässt, wobei die Vakuumkammer eingangsseitig an die Entnahmeeinrichtung permanent angeschlossen ist und ausgangsseitig ebenfalls permanent an die Strahlpumpe angeschlossen ist, wobei das Filtergehäuse für die Aufnahme von Filterelementen geeignet ist, die von außen nach innen oder von innen nach außen von dem abzureinigenden Fluid durchströmbar sind.

Die EP 0 856 345 A1, die WO 2014/131420 A1 und die WO 2010/118803 A1 beschreiben weitere Filtervorrichtungen.

Im Hinblick hierauf stellt sich die Erfindung die Aufgabe, eine Filtervorrichtung zur Verfügung zu stellen, die den betrieblichen Anforderungen in besonderem Maße gerecht wird.

Erfindungsgemäß ist diese Aufgabe durch eine Filtervorrichtung mit den im Patentanspruch 1 angegebenen Merkmalen gelöst.

Demgemäß ist die erfindungsgemäße Filtervorrichtung dadurch charakterisiert, dass diese ein Filtergehäuse und ein darin angeordnetes Filterelement aufweist, wobei mittels einer Entgasungseinrichtung, die einen Unterdruck erzeugt, im Filtergehäuse befindliche Luft durch Absaugen aus diesem entfernbar ist, wobei die Entgasungseinrichtung eine Vakuumkammer, eine Strahlpumpe und eine Ventileinrichtung, insbesondere in der Art eines Schieberventils, aufweist, die Luft aus dem Filtergehäuse in die Vakuumkammer verbringt und bei nachströmendem Hydraulikmedium den dahingehenden Strömungsweg verschließt, wobei die Entgasungseinrichtung eine Entnahmeeinrichtung aufweist, die als Blende oder Drossel wirkt, die zusätzlich oder alternativ zu der Ventileinrichtung Luft oder Öl aus dem Filtergehäuse in die Vakuumkammer strömen lässt, wobei die Vakuumkammer eingangsseitig an die Ventileinrichtung und/oder die Entnahmeeinrichtung permanent angeschlossen ist und ausgangsseitig ebenfalls permanent an die Strahlpumpe angeschlossen ist, wobei das Filtergehäuse für die Aufnahme von Filterelementen geeignet ist, die von außen nach innen oder von innen nach außen von dem abzureinigenden Fluid durchströmbar sind, wobei für die erste Alternative in einer oberen Endkappe des Filterelements eine Kanalführung vorgesehen ist, die von der höchsten Stelle des Fluidbehälters zur Vakuumkammer führt, wobei für die zweite Alternative in der Endkappe Kanäle vorgesehen sind, die von der Anströmseite des Filterelements zur Vakuumkammer führen, und wobei die Kanalführung zu einer Steuerkammer der Ventileinrichtung führt und die Kanäle der Endkappe an die Vakuumkammer, vorzugsweise über die als Entnahmeeinrichtung dienende Blende oder Drossel, angeschlossen sind.

Dadurch ist eine Absaugung aus zwei voneinander verschiedenen Regionen des Filtergehäuses ausbildbar.

Ferner ist vorgesehen, dass mittels einer Entgasungseinrichtung, die einen Unterdruck erzeugt, im Filtergehäuse befindliche Luft durch Absaugen aus diesem entfernbar ist. Dadurch ist die Gefahr vermieden, dass durch im Fluid mitgeführte Luft die Steifigkeit hydraulischer Antriebe oder Stelleinrichtungen oder die Funktionsfähigkeit von Ventilen beeinträchtigt wird. Die Abscheidung von Luft aus Fluiden im Allgemeinen ist Stand der Technik, siehe beispielsweise DE 10 2012 000 221 A1. Das dort aufgezeigte Verfahren zur Abtrennung von Gas aus einem in einem Reservoir bevorrateten Medium durch Erzeugen eines Differenzdrucks zwischen dem Reservoir und einem weiteren Reservoir ist auf Filtervorrichtungen nicht übertragbar. Die Erfindung sieht demgegenüber das Entfernen von Luft durch direktes Absaugen aus dem Filtergehäuse mittels einer Entgasungseinrichtung vor.

Die Strahlpumpe kann mittels eines Medienstroms, der insbesondere von einer Hydropumpe, wie einer Zahnradpumpe, erzeugt ist, betätigbar sein. Die Strahlpumpe kann hierbei durch einen externen Medienstrom oder in vorteilhafter Weise durch einen aus dem Filtrat der Vorrichtung gebildeten Medienstrom betätigt sein.

Die derartige Ventileinrichtung ist vorzugsweise mediengesteuert, d.h. sie spricht auf den Viskositätsunterschied Luft/Hydraulikfluid an.

Bei vorteilhaften Ausführungsbeispielen ist die Ausgangsseite der Strahlpumpe, vorzugsweise unter Zwischenschalten eines Rückschlagventils, an eine Führungseinrichtung angeschlossen, die den Fluidstrom der Strahlpumpe oberhalb des Fluidspiegels eines Fluidbehälters, in dem das Filtergehäuse angeordnet ist, entlang der Behälterwand unter Bildung eines Fluidfilms führt. Bei einer Filtervorrichtung, bei der das Filtergehäuse in einem ein Fluidvolumen bevorratenden Tank angeordnet ist, lässt sich durch eine derartige, tankseitige Einleitung des Öl/Luftgemisches aus der Strahlpumpe eine besonders effektive Luftseparation aus dem an der Tankwand anliegenden Fluidfilm erreichen. Gleichzeitig verhindert das Rückschlagventil eine mögliche Belüftung des Filtergehäuses aus dem oberhalb des Fluidpegels gelegenen Raum des Tanks.

Mit besonderem Vorteil kann an die Vakuumkammer ein Drucksensor oder Druckschalter angeschlossen sein, der jeweils zur Überwachung der Vakuumentgasung dient. Durch Anbindung an die betreffende Maschinensteuerung ist der Status der Entgasungseinrichtung überwachbar.

Die Vakuumkammer und/oder die Ventileinrichtung können Bestandteil eines den Fluidbehälter nach außen hin abschließenden Kopfteils des Filtergehäuses sein. Die Filtervorrichtung bildet dadurch, einschließlich der Entgasungseinrichtung, einen einheitlichen, kompakten Baukörper.

Nachstehend ist die Erfindung anhand eines in der Zeichnung dargestellten Ausführungsbeispiels im Einzelnen erläutert. Es zeigen:
- Fig. 1: einen schematisch vereinfachten Vertikalschnitt eines Ausführungsbeispiels der erfindungsgemäßen Filtervorrichtung;
- Fig. 2: in Symboldarstellung die Hydraulikschaltung des Ausführungs-beispiels;
- Fig. 3: einen Horizontalschnitt mit in einem Gehäuse-Kopfteil des Aus-führungsbeispiels liegender Schnittebene;
- Fig. 4: einen Vertikalschnitt eines seitlichen Längenabschnitts des Aus-führungsbeispiels im Bereich des Gehäuse-Kopfteils;
- Fig. 5: einen der Fig. 4 entsprechenden Vertikalschnitt mit gegenüber Fig. 4 um 30° verdrehter Schnittebene;
- Fig. 6: eine teilweise aufgeschnittene perspektivische Schrägansicht des eine Entgasungseinrichtung aufweisenden Bereichs des Gehäuse-Kopfteils des Ausführungsbeispiels;
- Fig. 7: eine Teilansicht des eine Ventileinrichtung aufweisenden Bereichs der Entgasungseinrichtung von Fig. 6, wobei die Ventileinrichtung geschlossen dargestellt ist;
- Fig. 8: eine der Fig. 7 entsprechende Darstellung, wobei sich die Ventileinrichtung im geöffneten Zustand befindet;
- Fig. 9: eine perspektivische Schrägansicht der oberen Endkappe des Filterelements des Ausführungsbeispiels; und
- Fig. 10: eine abgebrochen gezeichnete perspektivische Schrägansicht des unterhalb des Gehäuse-Kopfteils befindlichen Bereichs des Fluidbehälters des Ausführungsbeispiels mit einer Führungseinrichtung zum Einleiten eines Fluidstroms in den Behälter.

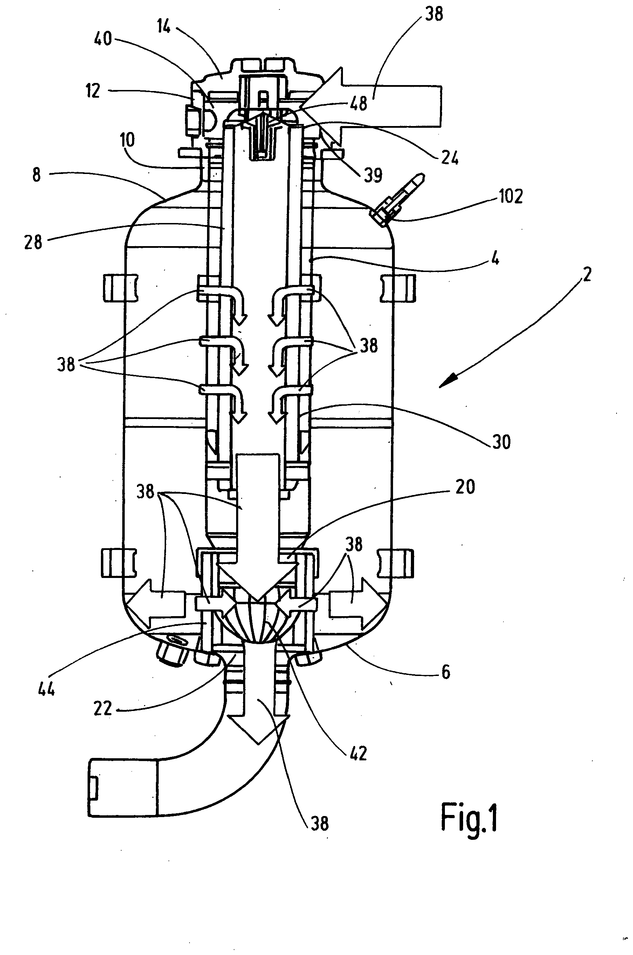

Nachstehend ist anhand der Zeichnung die Erfindung an einem Ausführungsbeispiel beschrieben, bei dem die Filtervorrichtung Bestandteil eines halb geschlossenen, ein Tanksystem aufweisenden Hydrauliksystems ist. Die Fig. 1 zeigt das Ausführungsbeispiel mit in einen kleinvolumigen, ein Fluidvolumen bevorratenden Tank 2 eingebautem Filtergehäuse 4. Der kreiszylindrische Tank 2 weist ein gewölbtes, unteres Bodenteil 6 und ein entsprechend gewölbtes Oberteil 8 auf, das in ein zur Behälterhochachse koaxiales Behälterhalsteil 10 übergeht. An dieses schließt sich ein den Tank 2 nach oben hin abschließendes Gehäuse-Kopfteil 12 an, dessen oberer Abschluss durch einen mit dem Kopfteil 12 verschraubten Verschlussdeckel 14 gebildet ist. Das Filtergehäuse 4, das sich im Tank 2 koaxial erstreckt, ist mit seinem oberen offenen Ende mit einem umgelegten Endrand 16 am Gehäuse-Kopfteil 12 gehalten und an diesem durch einen Dichtring 18 abgedichtet. An das untere Ende des Filtergehäuses 4 schließt sich eine Ausgangskammer 20 an, die die Fluidverbindung zu einem Fluidauslass 22 am Bodenteil 6 des Tanks 2 bildet. Die Ausgangskammer 20 besitzt eine axiale Höhe, die etwa einem Fünftel der Höhe des Tanks 2 entspricht.

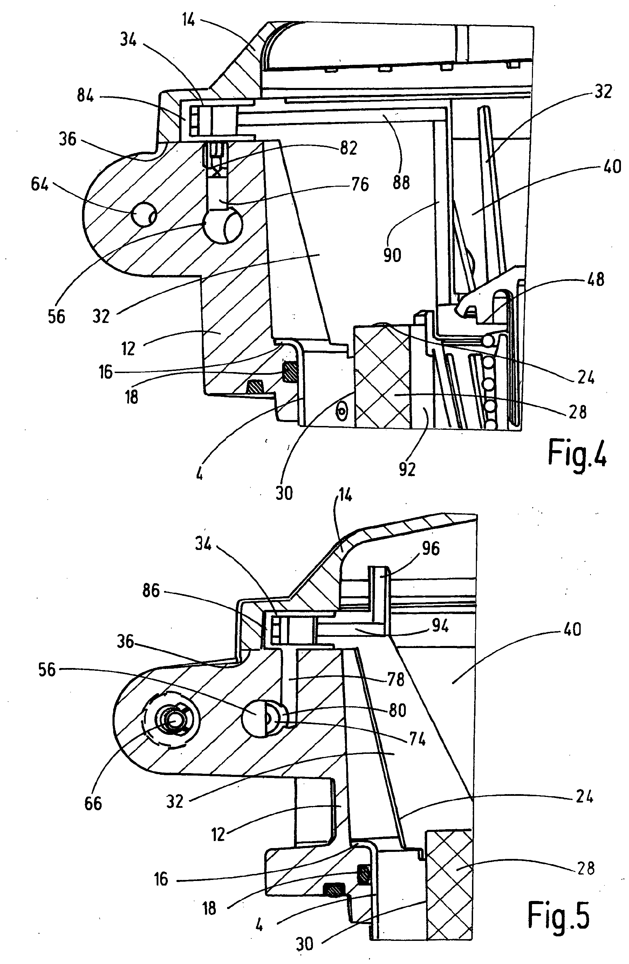

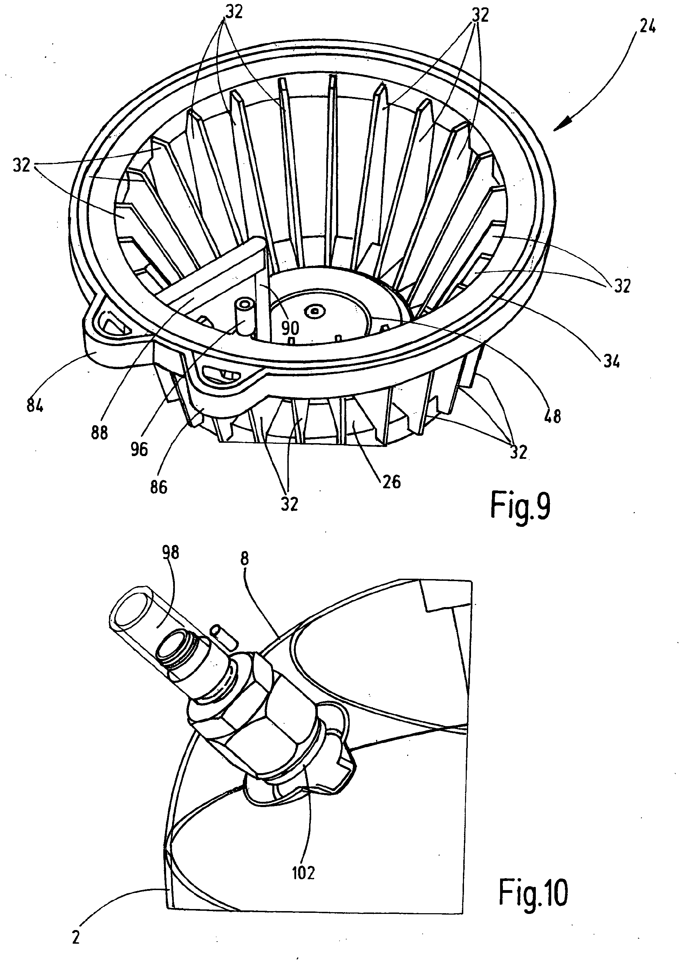

Die Fig. 9 zeigt in gesonderter Darstellung die obere Endkappe 24, die eine Einfassung 26 (Fig. 9) für das obere Ende des Filtermediums 28 (Fig. 4 und Fig. 5) des im Filtergehäuse 4 aufgenommenen Filterelements 30 sowie einen Sitz für ein Bypassventil 48 bildet. Die aus Kunststoffmaterial einstückig spritzgeformte Endkappe 24 weist, von der Einfassung 26 ausgehend, einen Kranz von flügelartigen Rippen 32 (nicht sämtliche beziffert) auf, die die Endkappe 24 korbartig nach oben hin erweitern und in einen oberen Ringkörper 34 übergehen, der bei in den Tank 2 eingebautem Filterelement 30 zwischen der Oberseite 36 des Kopfteils 12 und dem Deckel 14 eingespannt ist, s. Fig. 4 und 5.

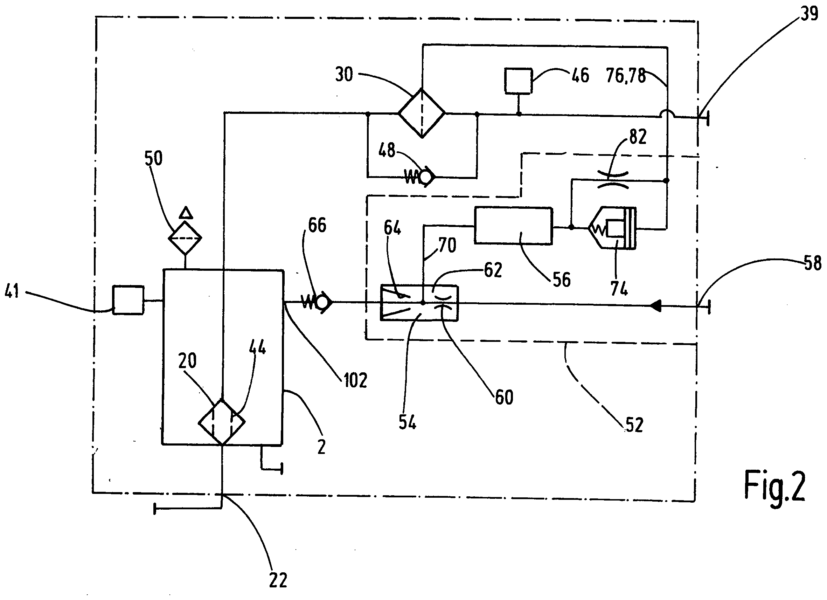

Die Fig. 2 zeigt in Symboldarstellung die Hydraulikschaltung der Filtervorrichtung. Die Fig. 1 verdeutlicht durch Strömungspfeile 38 den Betrieb der Filtervorrichtung, bei dem Unfiltrat über einen am Kopfteil 12 befindlichen Einlass 39 in den Innenraum 40 im Kopfteil 12 gelangt, von wo das Unfiltrat in den Zwischenraum zwischen Filtergehäuse 4 und Außenseite des Filtermaterials 28 des Filterelements 30 einströmt und das Filtermedium 28 von außen nach innen durchströmt. Das gebildete Filtrat strömt in die Ausgangskammer 20, in der sich ein Siebkorb 42 zwischen Kammereingang und dem Fluidauslass 22 befindet, aus dem das Filtrat abführbar ist. Die Außenwand der Ausgangskammer 20 ist durch einen Siebzylinder 44 gebildet, durch den Filtrat auch zum Innenraum des Tanks 2 gelangt. Im Betrieb ist die Ausströmrate am Auslass 22 derart eingestellt, dass sich bei der in das Kopfteil 12 einströmenden Menge des Unfiltrats im Innenraum des Tanks 2 ein Flüssigkeitspegel gewünschten Höhenniveaus einstellt. Für die diesbezügliche Maschinensteuerung kann ein opto-elektrischer Niveauschalter 41 am Tank 2 (Fig. 2) vorgesehen sein.

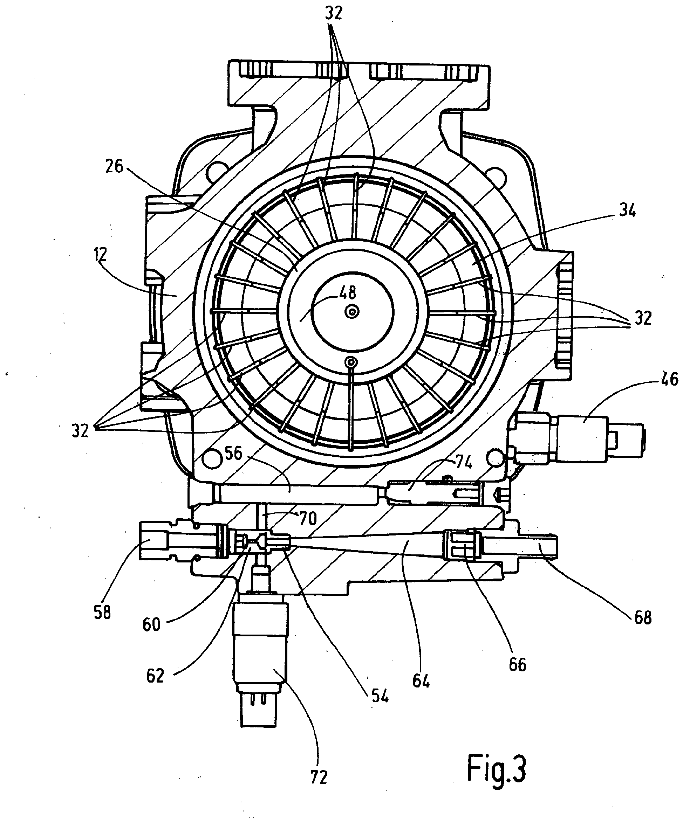

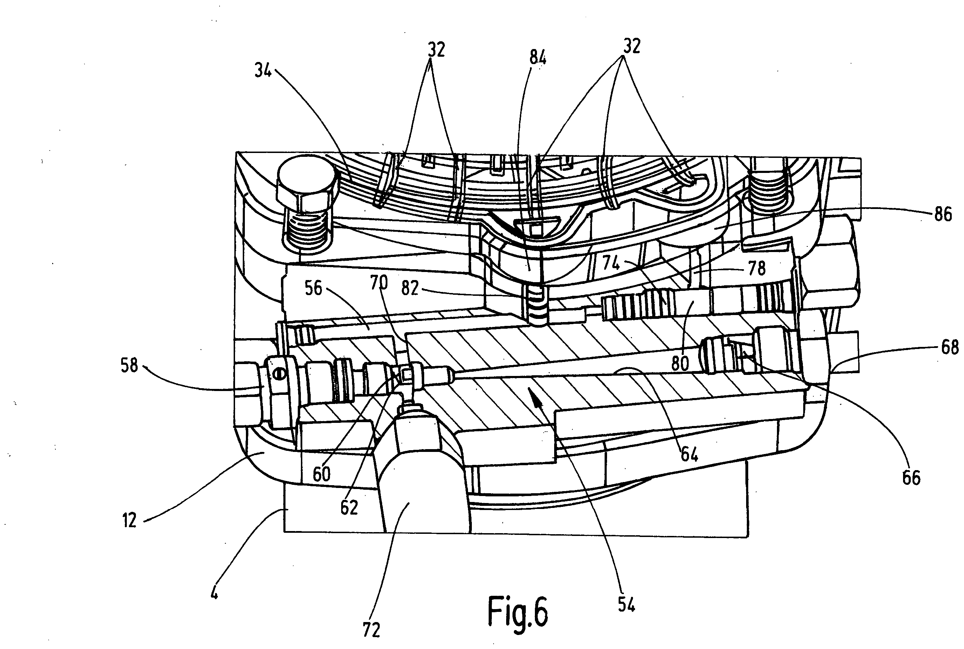

Wie in Fig. 2 gezeigt, sind in der bei Filtervorrichtungen üblichen Weise dem Filterelement 30 eine Verschmutzungsanzeige 46 und das Bypassventil 48 zugeordnet. Der Tank 2 weist zur Außenumgebung eine ebenfalls in üblicher Weise ausgebildete Tankbelüftung 50 auf. Der opto-elektrische Niveauschalter 41, der Bestandteil der Maschinensteuerung ist, ermöglicht im Betrieb die Einhaltung des gewünschten Fluidpegels im Tank 2 durch Steuerung des Filtratabflusses am Auslass 22. Mit 52 ist in der Schaltung von Fig. 2 eine Entgasungseinrichtung bezeichnet, die mit dem Filterelement 30 in Verbindung ist und deren Aufbau in Fig. 3 bis 8 näher dargestellt ist. In dem Horizontalschnitt des Kopfteils 12 von Fig. 3 wie auch in den horizontal geschnittenen Bereichen der Fig. 6 bis 8 verläuft die Schnittebene durch die Kavitäten der Entgasungseinrichtung 52, so dass deren Hauptbestandteile, wie Strahlpumpe 54 und Vakuumkammer 56, frei liegend und sichtbar sind. Die Strahlpumpe 54 weist für die Zufuhr eines sie betätigenden Medienstroms einen Druckanschluss 58 auf, über den von einer (nicht gezeigten) Pumpe, wie einer Zahnradpumpe, ein unter einem Druck von 25 bar bis 40 bar stehender Medienstrom, beim vorliegenden Beispiel Filtrat aus der Filtervorrichtung, mit einer Strömungsrate von 3,5 l/min einer Strahldüse 60 in einer Mischkammer 62 der Strahlpumpe 54 zugeführt wird. In der bei Strahlpumpen üblichen Weise schließt sich an die Mischkammer 62 ein Diffusor 64 an, an dessen Ende ein Rückschlagventil 66 vor einem Ausgangsanschluss 68 angeordnet ist, aus dem der die Pumpe 54 betreibende Medienstrom mit einem Druck von 1 bar austritt. Die Vakuumkammer 56 ist über einen Kanal 70 mit der Mischkammer 62 verbunden, an der auch ein Druckschalter-Sensor 72 angeschlossen ist, der mit der Maschinensteuerung zur Betriebsüberwachung-Steuerung in Verbindung ist. An das neben dem Diffusor 64 der Strahlpumpe 54 liegende Ende der Vakuumkammer 56 schließt sich eine Ventileinrichtung an, beim vorliegenden Beispiel in Form eines Schieberventils 74.

Wie die Fig. 4 und 5 zeigen, verlaufen von der Vakuumkammer 56 zur Oberseite 36 des Kopfteils 12 hin Fluidkanäle 76 bzw. 78, von denen letzterer in eine Steuerkammer 80 des Schieberventils 74 einmündet. Der andere Kanal 76 mündet über eine Drossel 82 in die Vakuumkammer 56 an einer gegenüber dem Schieberventil 74 versetzten Stelle ein.

Wie die Fig. 4 und 5 in Verbindung mit Fig. 9 zeigen, setzen sich die an der Oberseite 36 des Kopfteils 12 freiliegenden Enden der Kanäle 76 und 78 in radial auskragenden Ansätzen 84 bzw. 86 des Ringkörpers 34 der Endkappe 24 fort. Für die Fortsetzung des Kanals 76 zeigt die Fig. 4 Kanäle 88 und 90, die in der Endkappe 24 ausgebildet sind und bis zum inneren Filterhohlraum 92 des Filterelements 30 führen, der bei Durchströmung des Filtermediums 28 von innen nach außen die Anströmseite bildet. Für die Fortsetzung des Kanals 78 zeigt die Fig. 5 einen Kanal 94, der über ein vertikales Saugrohr 96 zu der innerhalb des Deckels 14 liegenden höchsten Stelle des Gehäuses führt.

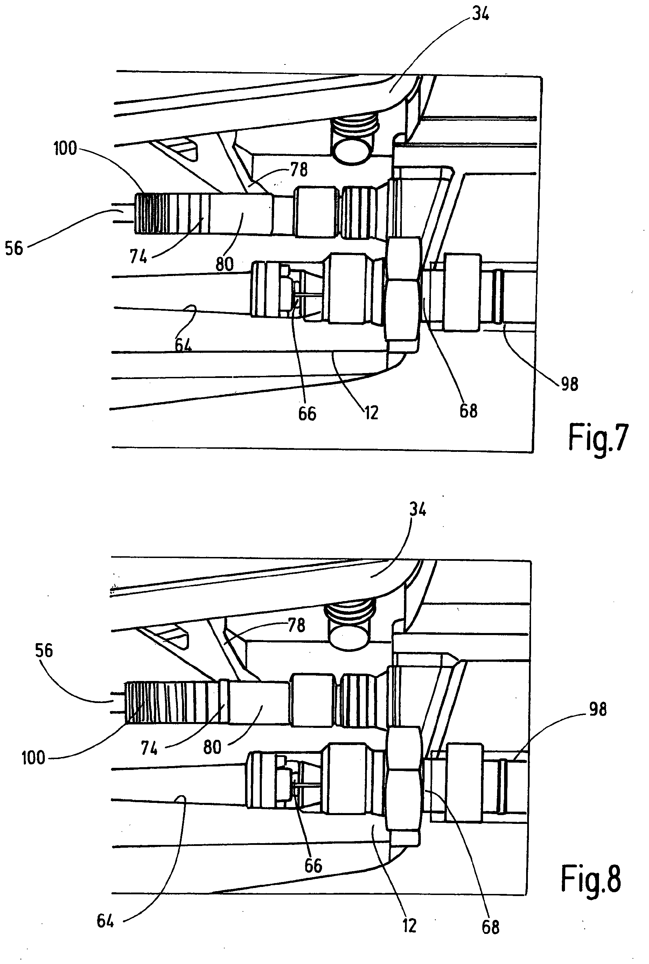

Das Schieberventil 74 ist durch eine Druckfeder 100 in die in Fig. 8 gezeigte, geöffnete Stellung vorgespannt, bei der der Kanal 78 mit der Vakuumkammer 56 in Verbindung ist. Wenn im Betrieb sich in der Steuerkammer 80 angesaugte Luft befindet, hält die Feder 100 aufgrund der Kompressibilität von Luft das Schieberventil 74 gegen den Saugdruck der Vakuumkammer 56 in geöffnetem Zustand, s. Fig. 8. Bei Ansaugen von Flüssigkeit und damit fehlender Kompressibilität des Druckpolsters in der Steuerkammer 80 schließt das Schieberventil 74, s. Fig. 7. Bei dieser Anordnung wird im Betrieb in die Vakuumkammer 56 Flüssigkeits/Luftgemisch über die Drossel 82 im Kanal 76 aus der höchsten Stelle des Gehäuses angesaugt, ebenso wie Luft, die über das Schieberventil 74 und den Kanal 78 von der Anströmseite des Filterelements 30 abgesaugt ist. Diese Medien saugt die Strahlpumpe 54 über den Kanal 70 aus der Vakuumkammer 56 in die Mischkammer 62, aus der sie zusammen mit dem die Strahlpumpe 54 betreibenden Medienstrom aus dem Diffusor 64 der Strahlpumpe 54 über das Rückschlagventil 66 am Anschluss 68 ausgestoßen werden. Dieser ist über eine flexible Leitung 98 (Fig. 10) mit einer Strömungs-Führungseinrichtung 102 verbunden. Diese ist an der Wand des gewölbten Tank-Oberteils 8 angeordnet und setzt sich im Tankinneren in einem in Fig. 10 nicht sichtbaren Ausströmstutzen fort, aus dem das mittels der Entgasungseinrichtung 52 abgesaugte Luft-Flüssigkeits-Gemisch entlang der Innenseite der Tankwand tangential in Umfangsrichtung geführt wird, so dass sich an der Tankwand ein Fluidfilm ausbildet. Dadurch findet eine besonders effektive Luftseparation aus dem Mediengemisch statt. Das vor dem Ausströmanschluss am Diffusor 64 der Strahlpumpe 54 befindliche Rückschlagventil 66 verhindert eine mögliche Rückströmung bei Stillstand des Systems und gegebenenfalls die Mündung der Führungseinrichtung 102 überschreitendem Füllstand des Tanks 2.

## Patentansprüche

1. Filtervorrichtung, insbesondere zur Filtration von Hydraulikmedien, mit einem Filtergehäuse (4) und einem darin angeordneten Filterelement (30), wobei mittels einer Entgasungseinrichtung (52), die einen Unterdruck erzeugt, im Filtergehäuse (4) befindliche Luft durch Absaugen aus diesem entfernbar ist, wobei die Entgasungseinrichtung (52) eine Vakuumkammer (56), eine Strahlpumpe (54) und eine Ventileinrichtung (74), insbesondere in der Art eines Schieberventils, aufweist, die Luft aus dem Filtergehäuse (4) in die Vakuumkammer (56) verbringt und bei nachströmendem Hydraulikmedium den dahingehenden Strömungsweg verschließt, wobei die Entgasungseinrichtung (52) eine Entnahmeeinrichtung (82) aufweist, die als Blende oder Drossel wirkt, die zusätzlich oder alternativ zu der Ventileinrichtung (74) Luft oder Öl aus dem Filtergehäuse (4) in die Vakuumkammer (56) strömen lässt, wobei die Vakuumkammer (56) eingangsseitig an die Ventileinrichtung (74) und/oder die Entnahmeeinrichtung (82) permanent angeschlossen ist und ausgangsseitig ebenfalls permanent an die Strahlpumpe (54) angeschlossen ist, wobei das Filtergehäuse (4) für die Aufnahme von Filterelementen (30) geeignet ist, die in einer ersten Alternative von außen nach innen oder in einer zweiten Alternative von innen nach außen von dem abzureinigenden Fluid durchströmbar sind, wobei für die erste Alternative in einer oberen Endkappe (24) des Filterelements (30) eine Kanalführung (76, 94, 96) vorgesehen ist, die von der höchsten Stelle des Fluidbehälters (2) zur Vakuumkammer (56) führt, wobei für die zweite Alternative in der Endkappe (24) Kanäle (88, 90) vorgesehen sind, die von der Anströmseite des Filterelements (30) zur Vakuumkammer (56) führen, und wobei die Kanalführung (76, 94, 96) zu einer Steuerkammer (80) der Ventileinrichtung (74) führt und die Kanäle (88, 90) der Endkappe (24) an die Vakuumkammer (56), vorzugsweise über die als Entnahmeeinrichtung (82) dienende Blende oder Drossel, angeschlossen sind.

2. Filtervorrichtung nach Anspruch 1, **dadurch gekennzeichnet, dass** die Strahlpumpe (54) mittels eines Medienstroms, der insbesondere von einer Hydropumpe, wie einer Zahnradpumpe, erzeugt ist, betätigbar ist.

3. Filtervorrichtung nach Anspruch 1 oder 2, **dadurch gekennzeichnet, dass** die Ausgangsseite der Strahlpumpe (54), vorzugsweise unter Zwischenschalten eines Rückschlagventils (66), an eine Führungseinrichtung (102) angeschlossen ist, die den Fluidstrom der Strahlpumpe (54) oberhalb des Fluidspiegels eines Fluidbehälters (2), in dem das Filtergehäuse (4) angeordnet ist, entlang der Behälterwand unter Bildung eines Fluidfilms führt.

4. Filtervorrichtung nach einem der vorstehenden Ansprüche, **dadurch gekennzeichnet, dass** an die Vakuumkammer (56) ein Drucksensor oder Druckschalter (72) angeschlossen ist, der jeweils zur Überwachung der Vakuumentgasung dient.

5. Filtervorrichtung nach Anspruch 3 oder 4, **dadurch gekennzeichnet, dass** die Vakuumkammer (56) und/oder die Ventileinrichtung (74) Bestandteil eines den Fluidbehälter (2) nach außen hin abschließenden Kopfteils (12) des Filtergehäuses (4) sind.

## Claims

1. Filter device, particularly for filtering hydraulic media, having a filter housing (4) and a filter element (30) arranged therein, the air contained in the filter housing (4) being able to be removed from said housing by suction using a degassing device (52) that generates a negative pressure, said degassing device (52) comprising a vacuum chamber (56), a jet pump (54) and a valve device (74), particularly in the form of a slide valve, which brings air from the filter housing (4) into the vacuum chamber (56) and closes the flow path leading therein in the presence of inflowing hydraulic medium, wherein the degassing device (52) comprises an extraction device (82) that acts as a diaphragm or restrictor, which, in addition to or as an alternative to the valve device (74), allows air or oil to flow into the vacuum chamber (56) from the filter housing (4), wherein the inlet side of the vacuum chamber (56) is permanently connected to the valve device (74) and/or the extraction device (82) and the outlet side is also permanently connected to the jet pump (54), wherein the filter housing (4) is suitable for receiving filter elements (30), through which the flow of fluid to be cleaned can pass from the outside to the inside in a first alternative or from the inside to the outside in a second alternative, wherein a channel passage (76, 94, 96) is provided in an upper end cap (24) of the filter element (30) for the first alternative, said channel passage leading from the highest point of the fluid container (2) to the vacuum chamber (56), wherein channels (88, 90) are provided in the end cap (24) for the second alternative, said channels leading from the inflow side of the filter element (30) to the vacuum chamber (56), and wherein the channel passage (76, 94, 96) leads to a control chamber (80) of the valve device (74) and the channels (88, 90) in the end cap (24) are connected to the vacuum chamber (56), preferably via the diaphragm or restrictor serving as an extraction device (82).

2. Filter device according to claim 1, **characterised in that** the jet pump (54) can be actuated by a media flow, particularly one generated by a hydraulic pump such as a gear pump.

3. Filter device according to either claim 1 or claim 2, **characterised in that** the outlet side of the jet pump (54) is connected to a guide device (102), preferably by interposing a non-return valve (66), said guide device guiding the fluid flow from the jet pump (54) above the fluid level of a fluid container (2), in which the filter housing (4) is arranged, along the container wall, forming a fluid film.

4. Filter device according to any of the preceding claims, **characterised in that** a pressure sensor or pressure switch (72) is connected to the vacuum chamber (56) and in each case serves to monitor vacuum degassing.

5. Filter device according to either claim 3 or claim 4, **characterised in that** the vacuum chamber (56) and/or the valve device (74) are part of a top part (12) of the filter housing (4) closing the fluid container (2) from the outside.

## Revendications

1. Installation de filtration, notamment pour la filtration de fluides hydrauliques, comprenant une enveloppe (4) de filtre et un élément (30) filtrant qui y est disposé, dans laquelle, au moyen d'un dispositif (52) de dégazage, qui produit une dépression, de l'air se trouvant dans l'enveloppe (4) du filtre peut en être retiré par aspiration, dans laquelle le dispositif (52) de dégazage a un chambre (56) sous vide, un éjecteur (54) et un dispositif (74) à soupape, notamment à la manière d'une soupape à coulisse, qui fait passer l'air de l'enveloppe (4) du filtre à la chambre (56) sous vide et, pour du fluide hydraulique venant ensuite, ferme le chemin d'écoulement, dans laquelle le dispositif (52) de dégazage a un dispositif (82) de prélèvement, qui agit comme diaphragme ou étranglement et qui, en plus ou en alternative au dispositif (74) de soupape, laisse passer de l'air ou de l'huile de l'enveloppe (4) du filtre à la chambre (56) sous vide, dans laquelle la chambre (56) sous vide est raccordée en permanence du côté de l'entrée au dispositif (74) de soupape et/ou au dispositif (82) de prélèvement et est raccordée du côté de la sortie également en permanence à l'éjecteur (54), dans laquelle l'enveloppe (4) du filtre est propre à recevoir des éléments (30) filtrants qui, suivant une première possibilité, peuvent être traversés de l'extérieur vers l'intérieur ou, suivant une deuxième possibilité, de l'intérieur vers l'extérieur par le fluide à épurer, dans laquelle, pour la première possibilité, il est prévu, dans une coiffe (24) d'extrémité supérieure de l'élément (30) de filtre, une conduite (76, 94, 96) par conduit, qui mène du point le plus haut du récipient (2) à fluide à la chambre (56) sous vide, dans laquelle, pour la deuxième possibilité, il est prévu, dans la coiffe (24) d'extrémité des conduits (88, 90), qui vont du côté d'attaque de l'élément (30) filtrant à la chambre (56) sous vide et dans laquelle la conduite (76, 94, 96) par conduit mène à une chambre (80) de commande du dispositif (74) de soupape et les conduits (88, 90) de la coiffe (24) d'extrémité sont raccordés à la chambre (56) sous vide, de préférence en passant par le diaphragme ou l'étranglement servant de dispositif (82) de prélèvement.

2. Installation de filtration suivant la revendication 1, **caractérisée en ce que** l'éjecteur (54) peut être actionné au moyen d'un courant de fluide, qui est produit notamment par une pompe hydraulique, comme une pompe à engrenages.

3. Installation de filtration suivant la revendication 1 ou 2, **caractérisée en ce que** le côté de sortie de l'éjecteur (54) est raccordé, de préférence, avec interposition d'un clapet (66) antiretour à un dispositif (102) de conduite, qui fait passer le courant de fluide de l'éjecteur (54) au-dessus du niveau de fluide d'un récipient (2) de fluide, dans lequel l'enveloppe (4) de filtre est disposée le long de la paroi du récipient avec formation d'un film de fluide.

4. Installation de filtration suivant l'une des revendications précédentes, **caractérisée en ce qu'**à la chambre (56) sous vide est raccordé un capteur de pression ou un interrupteur (72) manométrique, qui sert respectivement au contrôle du dégazage sous vide.

5. Installation de filtration suivant la revendication 3 ou 4, **caractérisée en ce que** la chambre (56) sous vide et/ou le dispositif (74) de soupape sont parties constituantes d'une partie (12) de tête de l'enveloppe (4) du filtre, fermant vers l'extérieur le récipient (2) de fluide.
